# EUROPEAN PATENT SPECIFICATION

(11) **EP 2 273 730 B1**
(45) Date of publication and mention of the grant of the patent: **13.01.2016**
(21) Application number: 08733879.4
(22) Date of filing: 02.04.2008
(51) Int. Cl.: H04L 12/70, H04L 12/28, H04L 12/54, H04L 12/911

(54) **A METHOD AND APPARATUS FOR PROCESSING THE ACCESS OF USER TERMINAL IN A FIXED ACCESS NETWORK**
VERFAHREN UND VORRICHTUNG ZUM VERARBEITEN DES ZUGANGS EINES BENUTZERENDGERÄTS IN EINEM FESTZUGANGSNETZ
PROCÉDÉ ET APPAREIL POUR TRAITER L'ACCÈS D'UN TERMINAL UTILISATEUR DANS UN RÉSEAU D'ACCÈS FIXE

(43) Date of publication of application: 12.01.2011
(73) Proprietor: ALCATEL LUCENT, 92100 Boulogne-Billancourt (FR)
(72) Inventor: BIN, Fanxiang, Shanghai 201206 (CN); MA, Songwei, Shanghai 201206 (CN)
(74) Representative: Knecht, Ulrich Karl
(86) International application number: PCT/CN2008/000665
(87) International publication number: WO 2009/121207

(56) References cited:
- EP-A1- 1 833 198
- WO-A1-02/39619
- WO-A1-2004/066566
- WO-A1-2006/034662
- WO-A1-2007/082448
- WO-A2-2008/025769
- CN-A- 1 992 628
- GB-A- 2 335 332
- US-A1- 2002 036 991

## Description

### TECHNICAL FIELDS

The invention relates to fixed access networks, particularly relates to a method and a device, in an access control equipment, for processing the access of user terminals and allocating resources, a method and a device, in a user-side equipment, for assisting the processing of the access of user terminals, and a method and a device, in user terminals, for conducting access with the assistance of user-side equipments.

### BACKGROUND OF THE INVENTION

Wi-Fi (Wireless Fidelity) technology, as well as the Bluetooth technology, belongs to short distance wireless technology used in office and home. This technology uses multiple bands around 2.4GHz, and its available standards includes: IEEE 802.11a/b/g/n (802.11x as a general term in the following part). Compared with Bluetooth, Wi-Fi has the advantages as follows:
Firstly, the ratio coverage of Wi-Fi is wide. While the radio coverage of Bluetooth is fairly narrow with a radius of about 15 meters, the radius of the radio coverage of Wi-Fi is up to 100 meters. Thanks to a new switch proposed by Vivato company, the communication distance of Wi-Fi can be extended to about 6.5 kilometers by a new switch introduced by Vivato company.
Secondly, the transmission rate of Wi-Fi is extremely high and up to 108Mbps (Mega bit per second) or even higher thus meets the requirement of personal and social informatization, even though the wireless communication quality of Wi-Fi technology is not so good, the data safety is a little worse than Bluetooth and the transmission quality needs improvement.
Thirdly, the entry threshold into the Wi-Fi field for the operator is low. The operator just needs to deploy hot spots (another name of the access point of Wi-Fi) in crowded areas such as airports, stations, cafes and libraries, and connect Internet with the above areas via broadband networks. In this way, due to that radio signals transmitted by the hot spot can reach scores of meters to a hundred meters in radius away from the access point, the user could access the Internet with a high rate by just bringing notebook or PDA supporting WLAN into these areas. That is to say, the operator needn't to use money for deploying network cables, so as to save the cost by a large degree.

Thus, the Wi-Fi technology, together with the Bluetooth technology which is also rich of competitiveness, becomes more and more widely deployed in various portable terminals (such as notebook computers, PDAs and smart phones).

Meanwhile, for the residential user terminals such as PCs at home and in the enterprise network, digital subscriber line (DSL) becomes the most commonly used access method. These residential terminals generally connect to residential gateways (such as DSL modem) via network cables, then access to the Internet via the DSL line between the DSL modem and the digital subscriber line access multiplexer (DSLAM).

However, according to the statistic, the average band usage ratio of the DSL line is only 1% in case that the DSL line only serves the residential user terminals. Therefore, people consider sharing the resource of DSL line among the Wi-Fi and Bluetooth terminals and the residential user terminals, so as to significantly expand the Internet-accessible area for the Wi-Fi and Bluetooth terminals. A typical implementing scheme is FON. Specifically, the domestic user (generally one family or one enterprise) of FON logs in the configuration interface of the router and manually sets the resource allocation in the DSL line. In one assumption, the total bandwidth of the DSL line is 2Mbps, then 1.5Mbps is set for the residential user terminals, and the remaining 512kbps is set for visitors such as Wi-Fi terminals.

However, FON has many obvious drawbacks, including:
1. the visiting Wi-Fi terminals could only know the signal quality between itself and each of the wireless access points by means of signal quality measuring. As to the resource condition in the DSL line between each of the wireless access points and the DSLAM, however, the Wi-Fi terminal couldn't know it by any means. Thus, the Wi-Fi terminal selects the access point in an arbitrary way.
2. In FON, the resource allocation in the DSL line is quasi-static. That is, the resource allocation in the DSL line keeps unchanged unless the domestic user of the FON re-sets the parameters by logging in the configuration interface of the router. For the whole procedure, the operator cannot control from the network-side, thus the arbitrary overwhelms rationality and it is not good for efficiently utilizing the resource in DSL line.

Therefore, a new technical solution is needed for assisting various terminals including but not limited to Wi-Fi terminals to make optimized access point selection, and conducting more reasonable allocation for transmission resource between user-side equipments and the access control equipment. US 2002/036 991 discloses a system for acess control to a fixed communication network via a local network to a mobile terminal device.

### SUMMARY OF THE INVENTION

To address the above drawbacks of the art so as to achieve the technical goal of the invention, the invention improves the access control equipment, the user-side equipment, and the user terminal. Wherein, the access control equipment obtains the resource condition of the link between itself and the user-side equipment, and provides it to each user terminal via the user-side equipment, for the convenience of the user terminal to perform the access point selection. Besides, the access control equipment further performs reasonable allocation for the resource in the link according to predefined rules without depending on the quasi-static configuration of user.

According to a first aspect of the invention, it is provided a method, in an access control equipment in fixed access networks, of processing the access of user terminals, comprising steps of: obtaining first relating information for transmission capability indicating a remaining bandwidth on a link between the access control equipment and each of one or more user-side equipment respectively; and informing corresponding user-side equipments of the obtained first relating information for transmission capability, wherein said corresponding user-side equipements (20, 21) are associated with the user terminals said first relating information for transmission capability is to be provided by said user-side equipment for the user terminals dominated by the user-side equipment.

According to a second aspect of the invention, it is provided a first processing device as defined in claim 8.

By adopting the technical solution of the invention, the user terminal could select the access point not only depending on the signal quality between itself and the access point, but also refers the resource condition between the network equipments (such as between the user-side equipment and the access control equipment) to make the above selection, so that it is guaranteed that an access point with reliable signal quality and resource condition can be selected. Besides, by way that the access control equipment participates in the scheduling for the transmission resource between the access control equipment and the user-side equipment, the resource requirement of the visitor can be satisfied sufficiently and the resource usage ratio can be increased in case that the residential user terminal doesn't require much resources.

### BRIEF DESCRIPTION OF THE DRAWINGS

Other features, aspects and advantages of the present invention will become obvious by reading the following description of several non-limiting embodiments with the aid of appended drawings.
Fig. 1 shows a schematic view of the network architecture for which the invention is applicable;
Fig. 2 shows a typical application scenario of the invention, namely the Wi-Fi terminals shares the transmission resources in the ADSL link with residential user terminals;
Fig. 3 shows a flowchart of the systematic method, in the ADSL access network, for processing the access of user equipments, according to a preferable embodiment of the invention;
Fig. 4 shows a block diagram of the first processing device, in the DSLAM of ADSL access network, for processing the access of the user terminal, according to an embodiment of the invention;
Fig. 5 shows a block diagram of the assisting processing device, in the RGW of ADSL access network, for assisting the processing of access of the user terminal, according to an embodiment of the invention;
Fig. 6 shows a block diagram of the accessing device, in the Wi-Fi terminal, for conducting access with the assistance of one or more user-side equipments, according to an embodiment of the invention.

Wherein, same or similar reference signs stand for same or similar step feature or means (module).

### DETAILED DESCRIPTION OF THE EMBODIMENTS

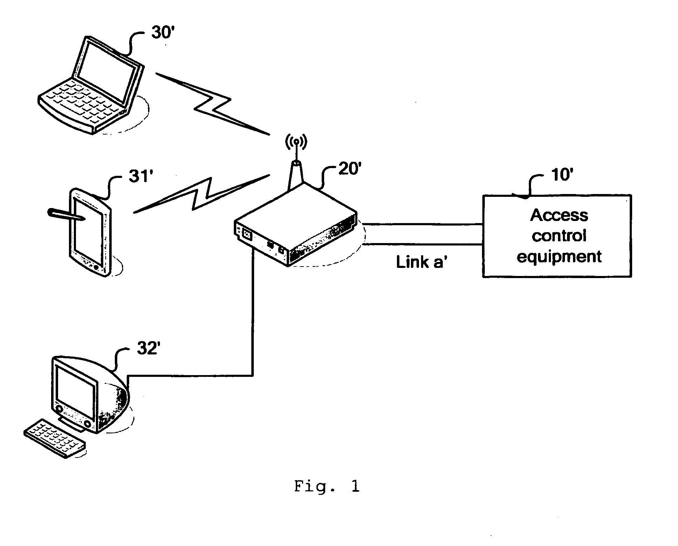

To clearly describe the various scenarios for which the present invention is applicable, description is made with respect to the applicable network architecture as shown in Fig. 1. In the drawings of the application document, only network devices in the access network are shown for simplicity, while links and network devices related to the core network are omitted for that they don't essentially relate to the concept of the invention. Also for simplicity, only one user-side equipment 20' dominated by an access control equipment 10' is shown. Those skilled in the art should understand that there could be one or more user-side equipments dominated by the access control equipment 10'. Besides, the user-side equipment referred to in the application is not the equipment located at the user side in strict meaning, and it can be understood as an access point. Any equipment, used for providing access for various user terminals under the control of the access control equipment according the concept of the invention, can be considered as the user-side equipment.

In Fig. 1, the user terminal 30' is a notebook computer with a wireless interface, the user terminal 31' is a PDA, and the user terminal 32' is the only residential user terminal and belongs to the domestic user of the network in which the user-side equipment 20' locates. The user-side equipment 20' connects with the access control equipment 10' via a link a'.

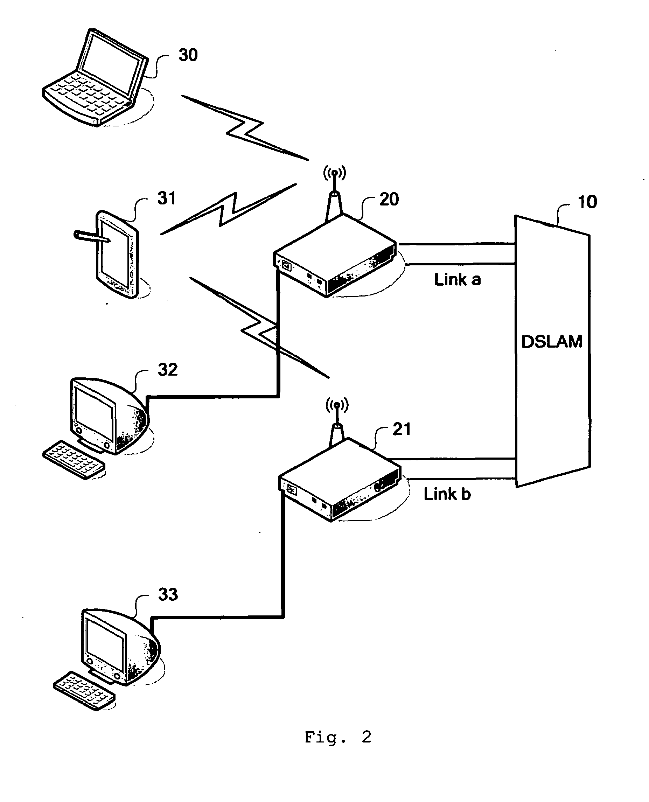

Wherein, the user terminals 30' and 31' typically use Wi-Fi or Bluetooth technology to communicate with the user-side equipment 20' ; correspondingly, the user-side equipment 20' has user-side ports of Wi-Fi or Bluetooth, and is typically a ADSL modem or fiber-optic modem integrated with a Wi-Fi or Bluetooth access point; the user terminal 32' typically has network interface card, and connects with the user-side equipment 20' via the network cable whose one end is plugged in the network interface card and the other end is plugged in the user-side equipment 20'; correspondingly, the access control equipment 10' is typically a DSLAM or other network equipment for access control, and the link a' between the access control equipment 10' and the user-side equipment 20' is the ADSL link (phone line) or fiber-optic link. It is assumed that all of the user terminals 30' , 31' and 32' access via the user-side equipment 20' , therefore the link a' is shared among the above three user terminals. Without loss of generality, referring to Fig.2, the following part will elucidate the invention by taking the ADSL access network as the example. Without any inventive work, those skilled in the art could apply the invention in other network environments such as fiber-optic access network based on the following explanation. Fig. 2 shows a typical application scenario of the invention, namely that Wi-Fi terminals share the transmission resource of the ADSL link with the residential user terminal. Wherein, the DSLAM 10 operates as the access control equipment, and it dominates multiple ADSL modems (referred as modems for simplicity in the following part), only modems 20 and 21 of which are shown; both modems 20 and 21 have sockets for network cable and Wi-Fi ports, wherein the socket for network cable is used for plug in the network cable for connecting with the residential user terminal, and Wi-Fi port enables the modem to communicate with the Wi-Fi terminals as a Wi-Fi access point; user terminals 30 and 31 belong to Wi-Fi terminals, characterized in that they support Wi-Fi technology; the user terminals 32 and 33 are dominated by modems 20 and 21 respectively. After accessing into the network, the user terminal 32 shares the ADSL link a between the modem 20 and the DSLAM 10 with the Wi-Fi terminal accessing via the same modem 20; the same principle applies to user terminal 33.

Wherein, in link a, the traffic data of the Wi-Fi terminals and the traffic data of the residential user terminal are differentiated by VLAN (virtual local area network) or PVC (permanent virtual circuit). Where, the PVC is one service provided by the packet switch network (the other one is datagram service) . Simply speaking, it is to establish a virtual logical connection by using the control mechanism within the network, and ensures the correctness and sequence of the transmitting of the signal packet on the circuit. The establishment and the teardown of the virtual circuit need to be conducted before and after the communication. PVC is a virtual circuit established at the initialization of the network, and this virtual circuit maintains. X.25 network and B-ISDN provide PVC service. Specifically, the traffic data of the Wi-Fi terminals transmitted on the link a carries one PVC connection identification (PVC-1 for example), while the traffic data of the residential user terminal transmitted on the link a carries another PVC connection identification (PVC-2 for example), so as to differentiate. Also, VLAN tag can also be used for differentiating the attribution of the data, namely that the traffic data of the Wi-Fi terminal and the traffic data of the residential user terminal carry different VLAN tags (for example the traffic data of the Wi-Fi terminal carries Tag1 while the traffic data of the residential user terminal carries Tag2). The modem 20 and the DSLAM 10 are aware of the attribution of the incoming data according to the PVC connection identification or the VLAN tag, then purposefully carry out operations such as forwarding and re-grouping.

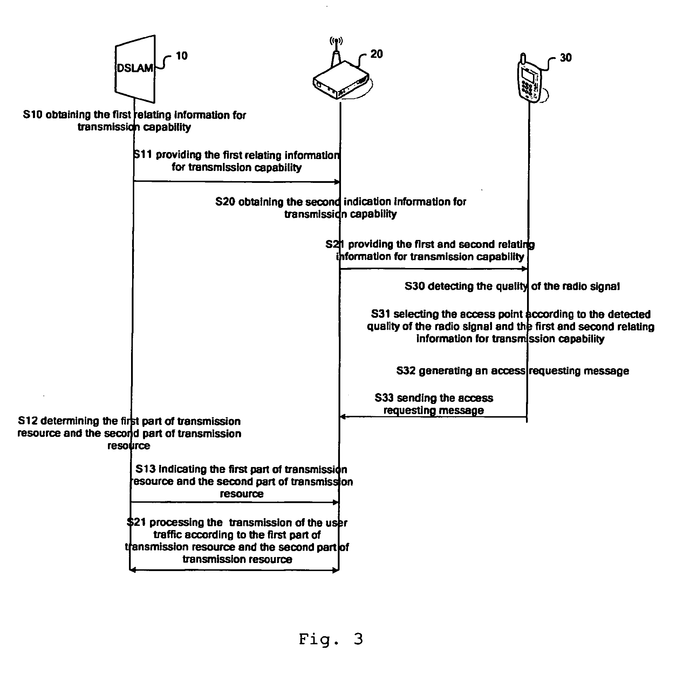

The following part will introduce the invention in point of view of system, by referring to Fig.3 in conjunction with Fig. 2. Wherein, Fig. 3 is a flowchart of the systematic method, in the ADSL network, of processing the access of user equipments according to a preferable embodiment of the invention. In step S10, the DSLAM 10 obtains the first relating information for transmission capability with respect to the modem 20, which is used for indicating the transmission capability of the link a between the DSLAM 10 and the modem 20. In the present application, the embodiments of the transmission capability of link a or link b comprise: the total bandwidth of the link, the remaining bandwidth of the link except for the bandwidth that has been taken up by the accessed residential user terminal, and the remaining bandwidth of the link except for the bandwidth that has been taken up by the accessed residential user terminal and by the accessed Wi-Fi and/or Bluetooth terminals. In this embodiment, for this moment, description is given by the example that the first indication information for transmission capability indicates the remaining bandwidth of the link except for the bandwidth that has been taken up by the accessed residential user terminal and by the accessed Wi-Fi and/or Bluetooth terminals.

Specifically, in step S10, it is assumed that the total bandwidth of the link a is 2Mpbs. The user terminal 32 (which is a residential user terminal and also called as user terminal of the second type) has accessed the network via the modem 20, and its traffic transmission actually takes up 512Kpbs bandwidth on the link a. Besides, there isn't any already-accessed Wi-Fi terminal dominated by modem 20 yet. Specifically, the DSLAM 10 could detect the total amount of the traffic data (including uplink and downlink traffic data) carrying PVC-2 or Tag2 during a certain period of time, and divide this amount by the length of the period, so as to obtain the bandwidth taken up by the user terminal 32 on the link a. Of course, in case that there isn't any already-accessed Wi-Fi terminal dominated by modem 20 yet, the DSLAM 10 could detect the data rate on its user-side port, connecting with the modem 20 via physical links, so as to obtain the bandwidth taken up status.

Thus, in this embodiment, the first indication information for transmission capability, obtained by DSLAM 10 in step S10, indicates the remaining bandwidth on link a: 1.5Mbps.

In step S11, the DSLAM 10 provides the above information for the modem 20 related with link a. Specifically, the updating for this above information can be done by means of the managing and controlling protocol CAPWAP on the user-side equipment, for example by using the field "capability information" in the "update WLAN" message. This filed has 16 bits, 11 bits of which are reserved for protocol expansion. Thus, it is feasible for writing the above bandwidth value into this field to inform the modem 20. For the specification of the "update WLAN" message, please refer to part 6.2.1 of http://www.ietf.org/internet-drafts/draft-ietf-capwap-pr otocol-binding-ieee80211-06.txt.

Preferably, the step S10 and S11 are executed periodically. As already described, the first relating information for transmission capability can indicate the total bandwidth on link a. What is to be pointed out is that, the operator usually charges a higher fee for a link with a higher total bandwidth, and in case that the user applies for a higher access bandwidth the fact is usually implied that: the user has higher usage requirement for the bandwidth. In this way, when the first relating information for transmission capability indicates the total bandwidth on link a, the Wi-Fi terminal is aware of a higher total bandwidth. The real available bandwidth, however, might varies as the requirement of the residential user terminal changes, and might be low at one certain period and high at another certain period. It can be seen that the remaining bandwidth on link a has a more reliable guide effect for the visitors than the total bandwidth on link a.

The first relating information for transmission capability, provided by DSLAM 10, will be broadcasted by the modem 20 through its user-side port of Wi-Fi (also call as the user-side port of the first type).

Preferably, the above method comprises a step S20, in which the modem 20 obtains the remaining Wi-Fi bandwidth value on its user-side port of Wi-Fi. The specific method is that, detecting the flow amount on this Wi-Fi port so as to be aware of the bandwidth occupation status, then determining the remaining bandwidth value according to the total Wi-Fi bandwidth, so as to obtain the second relating information for transmission capability. According to this embodiment, the second relating information for transmission capability can be written into the capability information" field in the "update WLAN" message together with the first relating information for transmission capability, or can be carried by other available fields of the message or even other messages. The specific manner of carriage is not related to the essence of the invention, thus won't be described unnecessarily. Preferably, in step S21, the modem 20 broadcasts the "update WLAN" message containing the first and second relating information for transmission capability through its user-side port of Wi-Fi. Due to that the coverage of Wi-Fi signal is fairly wide, as mentioned in the background of the art, if the modem locates in a residential building, it is probable that the Wi-Fi terminals in multiple floors could effectively detect the signal transmitted by the modem 20, so as to be aware of the first and second relating information for transmission capability.

Preferably, the step S20 and step S21 are executed periodically. And, the step S20 can be omitted. In case that the step S20 is omitted, in step S21, the modem 20 broadcasts the "update WLAN" message with the "capability information" field indicating the remaining bandwidth resource on the link a. The broadcasted information is identified by the characteristic information of the modem 20 such as MAC (media access control) address.

In the same principle, the DSLAM 10 informs the modem 21 of the first relating information for transmission capability on the link b. It is assumed that the total bandwidth of link b is 2M, the user terminal 33 hasn't access the network or even powers off, and there isn't any already-accessed Wi-Fi terminal dominated by modem 21 yet, thus the remaining bandwidth resource amount indicated by the first relating information for transmission capability on the link b is 2Mbps. Wherein, modem 21 and modem 20 typically belong to different home networks in this residential building.

Besides, the modem 21 preferably obtains the remaining Wi-Fi bandwidth on its user-side port of Wi-Fi as the second relating information for transmission capacity, and broadcasts it together with the first relating information for transmission capacity in a manner similar to that used by modem 20. The broadcasted information is identified by the characteristic information of the modem 21 such as MAC address.

It is assumed that there are two visitors in the building, which hold a user terminal 30 (a notebook computer supporting Wi-Fi technology) and a user terminal 31 (a PDA supporting Wi-Fi technology) respectively. In this way, both of the user terminals 30 and 31 are aware of the first and second relating information for transmission capacity corresponding to each of link a and link b for selecting the Wi-Fi access point (user-side equipment).

In the invention, preferably, the user terminal selects the access point according to the quality of wireless signal and the first relating information for transmission capability and/or the second relating information for transmission capability. Specifically, taking user terminal 30 as an example:
In step S30, the user terminal 30 detects the quality of the signal between itself and each of the Wi-Fi access points (modems 20 and 21 with user-side ports of Wi-Fi) . The specific method is like that: receiving from the above two modems 20 and 21 the information dedicated for the detection of signal quality or receiving the "update WLAN" message transmitted by the modems, carrying out detection of signal quality on the received signal and obtaining a detection result of signal quality.

Preferably, in step S31, the user terminal 30 selects the access point according to the detected quality of the Wi-Fi signal and the remaining bandwidth on link a. Specifically but without loss of generality, the user terminal 30 can select the one that meets the most of the following conditions as its home user-side equipment:
(1) the signal quality is larger than or equal to a first threshold;
(2) the bandwidth indicated by the first relating information for transmission capability is larger than or equal to a second threshold;
(3) the bandwidth indicated by the second relating information for transmission capability is larger than or equal to a third threshold.

Wherein, in case that there are several access points, each of which meets the most of the conditions, the user terminal 30 could select the home user-side equipment according to the following rules:
Condition (1) is superior to condition (2), and condition (2) is superior to condition (3). It is assumed that: both of the detected qualities of signals from modems 20 and 21 by the user terminal 30 are larger than the first threshold defined in the condition (1), and the remaining bandwidth on link a is larger than the second threshold while that on link b is smaller, and the remaining Wi-Fi bandwidths on each of the user-side ports of Wi-Fi on modem 20 and 21 are larger than the third threshold. In this way, modem 20 meets the above conditions (1) and (2) while the modem 21 meets the above conditions (1) and (3). According to the above rule, the user terminal 30 selects the modem 20 as the home user-side equipment.

When both of modem 20 and 21 simultaneously meet the above three conditions, the user terminal 30 could select the one with the best signal quality, or the one with the highest bandwidth indicated by the first relating information for transmission capability as the home user-side equipment. Of course, if the modems 20 and 21 only broadcast the first or second relating information for transmission capability, the user terminal 30 can still select the one that meets the most of the conditions as its home user-side equipment, and the conditions become the following two instead of the above three :
(1)' the signal quality is larger than or equal to a first threshold;
(2)' the bandwidth indicated by the first (second) relating information for transmission capability is larger than or equal to the second (third) threshold.

Those skilled in the art could conceive, according to the above embodiment, other cases of selecting the access point according to quality of Wi-Fi signal, the first relating information for transmission capability and the second relating information for transmission capability, without departing from the spirit of the invention and without any inventive work, and the description won't give unnecessary details.

It is assumed that the user terminal 30 selects modem 20 in step S31. Then, the method enters step S32.

In step S32, the user terminal 30 generates an access requesting message for the selected home user-side equipment which is used for requesting for access the network via the corresponding home user-side equipment.

In the following step S33, the user terminal 30 sends the generated access requesting message to the modem 20. Besides, it is assumed as well that the user terminal 31 selects the modem 21 as its home user-side equipment.

Due to that the step S10, S11, S20 and S21 are preferably executed periodically, that is to say the first relating information for transmission capability and the second relating information for transmission capability are updated at the user terminals 30 and 31 periodically, the user terminals 30 and 31 preferably execute the operation of detecting signal quality in step S30 and the operation of selecting the home user-side equipment in step S31, and execute the following operation of requesting access according to the new selection result of the home user-side equipment. Preferably, for saving the processor resource and Wi-Fi resource at the user terminal, the user terminals 30 and 31 generate new access requesting messages and send them to the new home user-side equipments only when the new determined home user-side equipment is different from the current used home user-side equipment.

The above elucidates each step in processing access of user in the access network. The following will describe the allocation, carried out by the access control equipment, of the transmission resource between the access control equipment and the user-side equipment. Those skilled in the art understand that there is not strict sequential relationship between the steps S12, S13 and S21 for allocating the transmission resource on the one hand and the steps S10, S11 to S30 for processing the access of user on the other hand. Still referring to Fig. 3 in conjunction with Fig. 2, taking the allocation of the transmission resource on link a as an example, in step S12, the DSLAM 10 determines how much bandwidth in the total 2Mbps bandwidth on link a is used for transmitting traffic data of the Wi-Fi terminals, and how much bandwidth is used for transmitting traffic data of the residential user terminals.

Specifically, considering that the domestic user of the residential user terminals usually pays certain fee for the ADSL service and shares it with the visiting Wi-Fi users for free, the DSLAM 10 preferably first considers the resource requirement of each of the residential user terminals dominated by the modem 20, then considers the resource requirement of the visiting Wi-Fi terminals under the premise that the resource demand of the residential user terminal is fully considered. The step S12 and S13 are preferably executed periodically, wherein the DSLAM 10 first determines whether modem 20 dominates already-accessed residential user terminals, and if yes, the DSLAM 10 detects the total bandwidth requirement of the residential user terminals and allocates the remaining bandwidth to the Wi-Fi terminals adaptively:

### ➢ moment 1: there is not accessed user terminals under modem 20

In this case, it is probable that the domestic user of the residential user terminal 32 has left, and the modem 20 is powered on and in normal operation. The 2Mbps bandwidth on the link a is idle. Preferably, the DSLAM 10 allocates all of part of the idle bandwidth for being used by Wi-Fi terminals by considering the potential Wi-Fi terminals. And the DSLAM 10 informs the modem 20 of the first part of transmission resource (bandwidth amount) determined for Wi-Fi terminals and the second part of transmission resource (bandwidth amount) determined for the residential user terminal.

Taking downlink data transmission as an example, due to that the traffic data of the users of the two types (Wi-Fi user and residential user) carry different identifications, the traffic data would enter different data buffers in the DSLAM 10 during the transmission. The size of the data buffer can be configured dynamically to correspond to different bandwidth so as to prevent data loss. Besides, during the forwarding of the data in the data buffers, it is feasible to use different scheduling schemes (different output rates) to realize each bandwidth control as well as the total bandwidth control, and this belongs to the commonly used technical solutions for adjusting bandwidth in the field. Simply speaking, it is similar to the temperature adjust and flow adjust in the water heater. The cold water (corresponding to traffic data of Wi-Fi users) and the hot water (corresponding to traffic data of residential user terminals) compete for the same outlet through difference pipes. When the priority comes close to the traffic data of residential user terminals, it equals to that the water tap is adjusted towards the hot water side. In this case, due to that the water tap is not adjusted upwards or downwards (the total bandwidth maintains), under the premise that the total bandwidth taken up by the two doesn't change, more bandwidth is allocated for the residential user terminals, and vice versa. When only increasing the total bandwidth taken up by the two (taking more bandwidth in the 2Mbps bandwidth for being used by traffic data transmission of the two), it equals to purely adjusting the water tap upwards or downwards. In these ways, the proportion of the bandwidth taken up by each of users of the two types in the total bandwidth taken up, as well as the total amount of bandwidth taken up can be adjusted.

In this case, the first relating information for transmission capability obtained by DSLAM 10 indicates that the available resource on link a is 2Mbps.

### ➢ Moment 2: user terminal 32 access the network via modem 20

At this time, the DSLAM 10 is aware of that the actual flow rate of the user terminal 32 is 512Kbps (for example browsing the common web pages) by monitoring the actual flow rate of the user terminal 32 (through detecting the flow rate on its port connecting with the modem 20). Then, the DSLAM 10 allocates the resource on link a as follows: 512Kbps for the residential user terminal; and 1. 5Mbps for the Wi-Fi terminals. Of course, it is also feasible for determining one part of 1.5Mbps for the Wi-Fi terminals.

In this case, the first relating information for transmission capability obtained by DSLAM 10 indicates that the available resource on link a is 1.5Mbps.

### ➢ Moment 3: user terminal 30 access the network via modem 20

As discussed above, Wi-Fi terminal 30 selects modem 20 for accessing the network. Thus, under the circumstance that there is the already-accessed user terminal 32, the DSLAM 10 first meets the resource requirement of the residential user terminal 32. After being aware of that the actual flow rate of the user terminal 32 is still 512Kpbs, the DSLAM 10 still determines that the remaining 1.5Mbps bandwidth is the first part of transmission resource for transmitting traffic of Wi-Fi terminals, even if the bandwidth actually used by user terminal 30 is just one part of it. After that, if there are other Wi-Fi terminals selecting modem 20 as the home user-side equipment for access, this 1.5Mbps bandwidth is shared among other Wi-Fi terminals and the user terminal.

### ➢ Moment 4: the user terminal 32 starts BT application programs

BT application program takes up lots of network resources, especially when there are enough download sources in the network. Thus, the actual flow rate of the user terminal 32 keeps increasing until it reaches 2Mbps (namely 256K Bytes per second). At this time, the DSLAM 10 notices that the bandwidth requirement of the residential user terminal 32 keeps increasing. Thus, it keeps decreasing the first part of transmission resource (for transmitting traffic data of Wi-Fi terminals) continuously and increases the second part of transmission resource (for transmitting traffic data of residential user terminal) correspondingly, until the bandwidth on link a taken up by the Wi-Fi terminals (including the user terminal 30) is completely deprived.

At this moment, the first part of transmission resource is 0 while the second part of transmission resource is 2Mbps. The first relating information for transmission capability on link a obtained by DSLAM 10 is 0.

Thus, when executing the step S31 again, the user terminal 30 considers selecting other Wi-Fi access points, for example modem 21 for access, due to that there isn't any available bandwidth resource on link a.

### ➢ Moment 5: the user terminal 32 closes the BT application programs

The user terminal 32 ends file download and closes the BT application program, and turns to start an online game program (for example world of warcraft), and the actual flow rate drops from 2Mbps to 1Mbps. Thus, after the DSLAM 10 is aware of that the bandwidth requirement of the user terminal 32 drops, it decreases the second part of transmission resource continuously and increases the first part of transmission resource, until both of the first part of transmission resource and the second part of transmission resource are adjusted as 1Mbps.

At this moment, the first relating information for transmission capability on link a obtained by DSLAM 10 indicates that the available bandwidth is 1Mbps. When the user terminal 30 that has switched to access via modem 21 executes step S31 again, it might select modem 20 as the new home user-side equipment again.

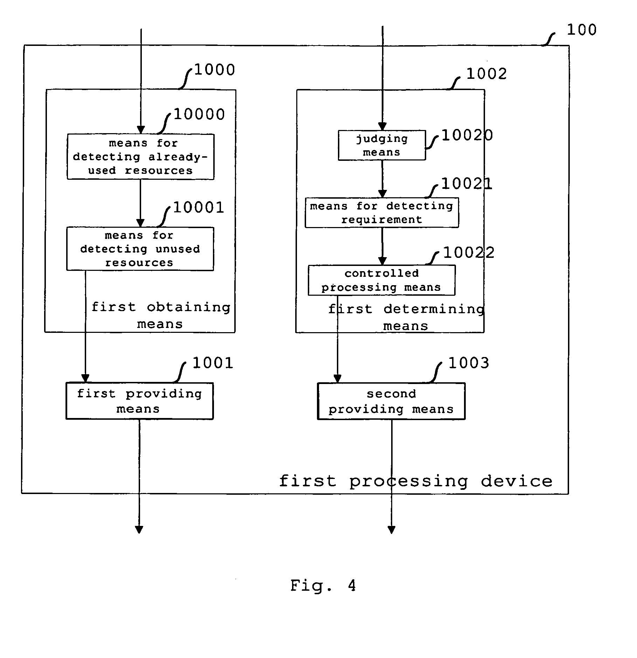

The above part introduces the relating methods, provided by the invention, in the access control equipment, the user-side equipment and the user terminal. In the following part, description will be given from the aspect of device (module) by referring to the block diagram of each of the equipments. Fig. 4 shows a block diagram of the first processing device, in the DSLAM of ADSL access network, for processing the access of the user terminal, according to an embodiment of the invention. Description will be given as follows by referring to Fig. 4 in conjunction with Fig. 2.

The first processing device 100 as shown comprises: a first obtaining means 1000, a first providing means 1001, a first determining means 1002 and a second providing means 1003. Specifically, the first obtaining means 1000 comprises a means 10000 for detecting already-used resources and a means 10001 for detecting unused resources; the first determining means 1002 comprises a judging means 10020, a means 10021 for detecting requirement anda controlled processing means 10022. The first obtaining means 1000 is mainly used for obtaining the resource condition (also called as first relating information for transmission capability) on the link a between the DSLAM 10 and the modem 20 as shown in Fig. 2. Wherein, it is assumed that the total bandwidth on link a is 2Mbps, then the first relating information for transmission capability obtained by the first obtaining means 1000 can indicate either the total bandwidth (2Mbps) on this link, or the remaining bandwidth of the link except for the bandwidth that has been taken up by the already-accessed residential user terminal, or the remaining bandwidth of the link except for the bandwidth that has been taken up by the already-accessed residential user terminal and by the already-accessed Wi-Fi terminals. In this embodiment, without loss of generality, description is given by the example that the first indication information for transmission capability indicates the remaining bandwidth of the link except for the bandwidth that has been taken up by the already-accessed residential user terminal and by the already-accessed Wi-Fi and/or Bluetooth terminals.

Preferably, the first obtaining means 1000 periodically executes the operation of obtaining the first indication information for transmission capability, so as to update the link condition continuously for the convenience of selecting proper access point for the user terminal, the details of which will be discussed in the following part. Specifically, the means 10000 for detecting already-used resources in the first obtaining means 1000 detects the practical flow amount (bandwidth already taken up, 512Kbps assumed) in link a, and provides it for the means 10001 for detecting unused resources in the same first obtaining means 1000, and the means 10001 for detecting unused resources determines the remaining bandwidth on link a is 1.5Mbps. Similarly, the first relating information for transmission capability corresponding to link b indicates 1Mbps remaining bandwidth on link b.

The obtained first relating information for transmission capability (indicating the remaining bandwidth on the link) will be conveyed to the first providing means 1001 which will provide the obtained first relating information for transmission capability for the corresponding modem. That is, the first relating information for transmission capability corresponding to link a will be provided for the modem 20, while the first relating information for transmission capability corresponding to link b will be provided for the modem 21.

The first obtaining means 1000 mainly obtains the resource condition of the link between the DSLAM 10 and the modem with the wireless user-side port. For links between the DSLAM 10 and modems without wireless user-side port (not integrated with a wireless access point), it is optional that whether or not its resource condition is to be obtained.

The first relating information for transmission capability is broadcasted at the corresponding user-side equipment, for the selection of access point of the wireless terminals. The first processing device, provided by the invention, not only supports optimized selection for wireless access point, but also schedules the resource allocation for the ADSL link so as to realized optimized resource utilization. Specifically as follows:
The judging means 10020 in the first determining means 1002 judges whether there is already-accessed residential user terminal dominated by the modem 20. The implementation of the judgment is like: judging whether there is traffic data, carrying PVC identification (or VLAN tag) corresponding to the residential user terminal, on the DSL link.

It is assumed that the residential user terminal 32 has already accessed via the modem 20. Then, the judging means 10020 will obtains a positive judgment result, and instructs the means 10021 for detecting requirement to detect the total bandwidth requirement of the already-accessed residential user terminal. The detected total bandwidth requirement of the residential user terminal is then provided for the controlled processing means 10022, which takes the detected total bandwidth requirement of the residential user terminal as a second part of transmission resource (for the traffic transmission of the residential user terminal, 512Kbps assumed), and takes part or all of the remaining bandwidth as a first part of transmission resource (for traffic transmission of Wi-Fi terminals, 1.5Mbps assumed).

The determined first part of transmission resource and the second part of transmission resource will be provided for the modem 20 by the second providing means. At one certain moment after that, the user terminal 32 starts to run software with large resource requirement, such as Bit Torrent (a network transporting software based on p2p protocol) . The bandwidth requirement of user terminal 32 rises to 2Mbps.

In this case, for first considering the residential user terminal 32 with high priority, after the means 10021 for detecting requirement of the first determining means 1002 detects that the resource requirement of the user terminal 32 rises, the first determining means 1002 adjusts the portion of each of the first part and second part of transmission resource in the 2Mbps total bandwidth via the controlled processing means 10022. For example, it reconfigures the first part of transmission resource as 0, and reconfigures the second part of transmission resource as 2Mbps.

After that, the first relating information for transmission capability provided by the first providing means 1001 indicates that the remaining resource on link a is 0. Of course, the priority of user terminal can be configured flexibly. For example, a Wi-Fi terminal with a specific MAC address can be set with a priority higher than the residential user terminal. Then, DSLAM 10 still satisfies the resource requirement of the Wi-Fi terminal with higher priority, even if the resource requirement of the residential user terminal rises to a high value.

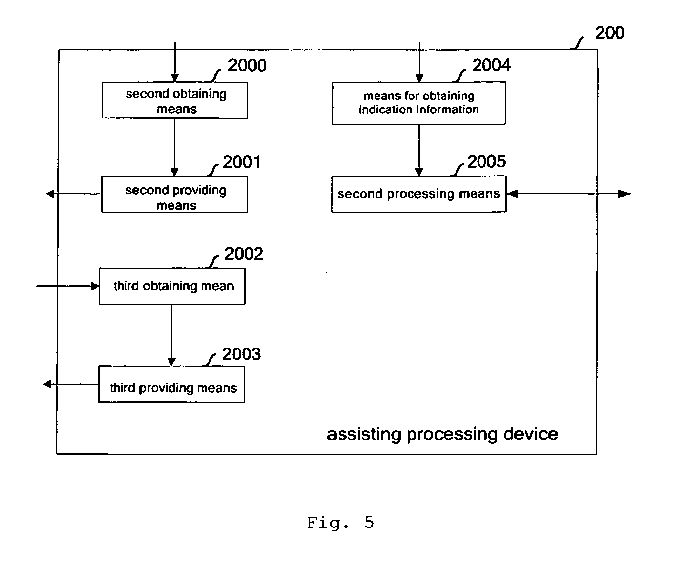

Fig. 5 is a block diagram of the assisting processing device, in the RGW of ADSL access network, for assisting the processing of access of the user terminal, according to an embodiment of the invention.

The assisting processing device 200 as shown comprises: a second obtaining means 2000, a second providing means 2001, a third obtaining mean 2002, a third providing means 2003, a means 2004 for obtaining indication information and a second processing means 2005.

Description will be given as follows by referring to Fig. 5 in conjunction with the modem 20 shown in Fig. 2.

The second obtaining means 2000 in the modem 20 obtains the first relating information for transmission capability from the DSLAM 10. Preferably, the information indicates the remaining bandwidth of the link a except for the bandwidth that has been taken up by the already-accessed residential user terminal and by the already-accessed Wi-Fi terminals. The remaining bandwidth is assumed as 1.5Mbps.

The second providing means 2001 broadcasts the first relating information for transmission capability obtained by the second obtaining means 2000, so as to inform of it the potential Wi-Fi terminals that is about to access this network.

Preferably, the third obtaining means 2002 detects the condition of Wi-Fi bandwidth remaining on its Wi-Fi user-side ports, generates second relating information for transmission capability and conveys it to the third providing means 2003. After that, the third providing means 2003 broadcasts the second relating information for transmission capability to the potential Wi-Fi terminals via the Wi-Fi user-side ports. It can be seen that, the functions of the second providing means 2001 and the third providing means 2003 are similar. Thus, in practical implementation, the second and the third providing means can be combined and one same providing means can be used for executing the operation of providing the first and second relating information for transmission capability for the user side.

The first and second relating information for transmission capability provided by the modem 20 will be used by Wi-Fi terminals that have accessed and haven't accessed yet for updating and determining access points.

The assisting processing device 200 further comprises a means 2004 for obtaining indication information that mainly takes charge of obtaining indication information, from the DSLAM 10, which is used for indicating a first part of transmission resource and a second part of transmission resource. Wherein, the first part of transmission resource is used for transmitting traffic data on Wi-Fi terminals on link a and the second part of transmission resource is used for transmitting traffic data on residential user terminals on link a. For example, the first part of transmission resource is 512Kbps and the second part of transmission resource is 1.5Mbps.

According to the indication information obtained by the means 2004 for obtaining indication information, the second processing means 2005 is enabled to communicate user data with DSLAM 10 under controlled bandwidth. Wherein, the bandwidth between the DSLAM 10 and the modem 20, for transmitting traffic of the residential user terminal, is no more than 1.5Mbps, while the bandwidth for transmitting traffic of the Wi-Fi terminals is no more than 512Kbps.

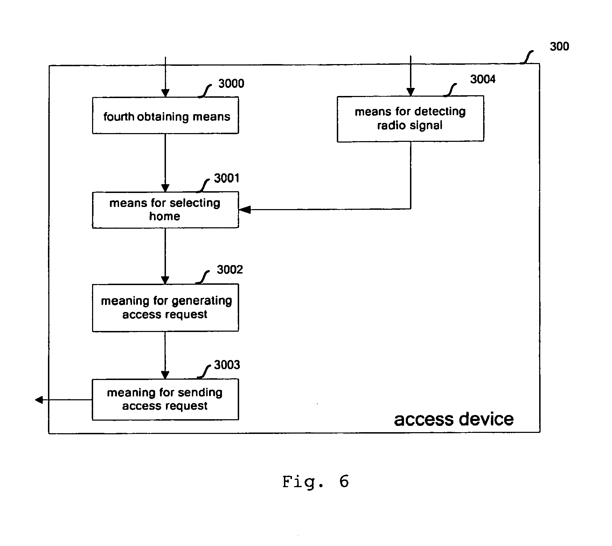

Fig. 6 is a block diagram of the access device, in the Wi-Fi terminal, for conducting access with the assistance of one or more user-side equipments according to an embodiment of the present invention.

The access device 300 as shown comprises: a fourth obtaining means 3000, a means 3001 for selecting home, a meaning 3002 for generating access request, a meaning 3003 for sending access request and a means 3004 for detecting radio signal. Description is given as follows by taking user terminal 30 as an example.

Wherein, the fourth obtaining means 3000 obtains the first relating information for transmission capability and/or the second relating information for transmission capability from the signal broadcasted by the modem 20 via one Wi-Fi port. And the means 3004 for detecting radio signal takes charge of detecting the strength of the radio signal from each of the modems, and obtains the quantized strength values. The first and/or second relating information for transmission capability will be used by the means 3001 for selecting home to select the home user-side equipment Wherein, the selecting procedure is preferable selecting the one that meets the most of the following conditions as its home user-side equipment:
(1) the signal quality is larger than or equal to a first threshold;
(2) the bandwidth indicated by the first relating information for transmission capability is larger than or equal to a second threshold;
(3) the bandwidth indicated by the second relating information for transmission capability is larger than or equal to a third threshold.
in case that there are several access points, each of which meets the most of the conditions, the means 3001 for selecting home could select the home user-side equipment according to the following rules:
Condition (1) is superior to condition (2), and condition (2) is superior to condition (3). It is assumed that: both of the qualities of signals from modems 20 and 21 detected by the means 3004 for detecting radio signal are larger than the first threshold defined in the condition (1), and the remaining bandwidth on link a is larger than the second threshold while that on link b is smaller, and the remaining Wi-Fi bandwidths on each of the user-side ports of Wi-Fi on modem 20 and 21 are larger than the third threshold. In this way, modem 20 meets the above conditions (1) and (2) while the modem 21 meets the above conditions (1) and (3). According to the above rule, the means 3001 for selecting home selects the modem 20 as the home user-side equipment.

When both of modem 20 and 21 simultaneously meets the above three conditions, the means 3001 for selecting home could select the one with the best signal quality, or the one with the largest bandwidth indicated by the first relating information for transmission capability as the home user-side equipment. Of course, if the modems 20 and 21 only broadcast the first or second relating information for transmission capability, the user terminal 30 can still select the one that meets the most of the conditions as its home user-side equipment, and the conditions become the following two from the above three:
(1)' the signal quality is larger than or equal to a first threshold;
(2)' the bandwidth indicated by the first (second) relating information for transmission capability is larger than or equal to the second (third) threshold.

Those skilled in the art could conceive, according to the above embodiment, other cases of selecting the access point according to quality of Wi-Fi signal, the first relating information for transmission capability and the second relating information for transmission capability, without departing from the spirit of the invention and without any inventive work, and the description won't give unnecessary details.

After selecting one user-side equipment as the home user-side equipment, the means 3002 for generating access request generates an access requesting message correspondingly, and provides it for the means 3003 for sending access request to send to the corresponding user-side equipment via Wi-Fi port.

Each feature directly relating to the concept of the invention has been described clearly in the application document. Due to that the invention doesn't relate to the improvement to the authentication operation for the Wi-Fi terminals, the application doesn't refer to it for simplicity. However, those skilled in the art could understand that this does not influence the clarity or completeness of the solution of the invention. The modem and DSLAM incorporating the invention can still use the prior mature Wi-Fi authentication technology to authenticate the terminals.

The preferable embodiments of the present invention have been described above. What is to be understood is that the invention is not limited by those above specific embodiments, and easy modifications can be made by those skilled in the art without departing from the scope of the appended claims.

## Claims

1. A method, in an access control equipment (10) in fixed access networks, of processing access of user terminals (30, 31, 32, 33), comprising steps of:
a. obtaining first relating information for transmission capability indicating a remaining bandwidth on a link (a, b) between the access control equipment (10) and each of one or more user-side equipment (20, 21) respectively;
b. informing corresponding user-side equipments (20, 21) of the obtained first relating information for transmission capability, wherein said corresponding user-side equipments (20, 21) are associated with the user terminals (30, 31, 32, 33), said first relating information for transmission capability is to be provided by said user-side equipment (20, 21) for the user terminals (30, 31, 32, 33) dominated by the user-side equipment.

2. A method according to claim 1,
**characterized in that**,
said at least one user-side equipment (20, 21) comprises at least one user-side equipment with user-side ports of a first type(20, 21), said step a comprises:
a1. for each of the user-side equipments with user-side ports of the first type (20, 21), determining the transmission resource, between the access control equipment (10) and the user-side equipment (20, 21), available for the traffic transmission of terminals of first type, so as to obtain a determining result of available resource;
a2. taking the determining result as said obtained first relating information for transmission capability.

3. A method according to claim 2,
**characterized in that**,
said step a1 comprises:
a11. detecting the transmission resource, between the access control equipment (10) and the user-side equipment (20, 21), that has been used for the traffic transmission of already-accessed user terminals (30, 31, 32, 33) dominated by the user-side equipment (20, 21), so as to obtain detection result of resource occupation;
wherein said accessed user terminals (30, 31, 32, 33) comprise accessed user terminals of the first type (30, 31) and/or accessed user terminals of a second type (32, 33);
a12. determining the transmission resource, between the access control equipment (10) and the user-side equipment (20, 21), that hasn't been used for the traffic transmission of already-accessed user terminals (30, 31, 32, 33), according to the detection result of resource occupation and total transmission resource between the access control equipment (10) and the user-side equipment (20, 21), and taking the determined transmission resource as said determining result of available resource.

4. A method according to claim 3,
**characterized in that**,
the method further comprises the step of:
i. determining a first part of transmission resource and a second part of transmission resource from the total transmission resource between the access control equipment (10) and the user-side equipment (20, 21), according to a predefined rule, so as to generate indication information for indicating the first part of transmission resource and the second part of transmission resource;
wherein, said first part of transmission resource is to be used for the traffic transmission of at least one user terminal of the first type (30, 31) dominated by the user-side equipment (20, 21), and
said second part of transmission resource is to be used for the traffic transmission of at least one user terminal of the second type (32, 33) dominated by the user-side equipment (20, 21);
ii. providing said generated indication information for said user-side equipment (20, 21).

5. A method according to claim 4,
**characterized in that**,
said step i comprises:
i1. determining whether or not the user-side equipment (20, 21) dominates at least one already-accessed user terminal of the second type (32, 33);
i2. detecting the sum of demanding resource of said at least one already-accessed user terminals of the second type (32, 33), in case that the user-side equipment (20, 21) dominates at least one already-accessed user terminal of the second type (32, 33);
i3. taking the detected sum of demanding resources of said at least one already-accessed user terminals of the second type (32, 33) as said determined second part of transmission resource;
i4. taking part or all of the transmission resource, in the total transmission resource between the access control equipment (10) and the user-side equipment (20, 21) except for the second part of transmission resource, as said determined first part of transmission resource.

6. A method according to claim 5,
**characterized in that**,
said step i further comprises:
i2'. taking part or all of the total transmission resource between the access control equipment (10) and the user-side equipment (20, 21) as said determined first part of transmission resource, in case that the user-side equipment (20, 21) does not dominate any already-accessed user terminal of the second type (32, 33).

7. A method according to any one of claims 2 to 6,
**characterized in that**,
said user-side ports of the first type comprise user-side port of Wi-Fi and/or Bluetooth;
said user terminals of the first type (30, 31) comprise user terminals (30, 31) communicating with said user-side equipment (20, 21) using Wi-Fi and/or Bluetooth; said user terminals of the second type (32, 33) comprise user terminals (32, 33) communicating with said user-side equipment (21) by way of fixed lines.

8. A first processing device (100), in an access control equipment (10) in fixed access networks, for processing access of user terminals (30, 31, 32, 33), comprising:
a first obtaining means (1000), for obtaining first relating information for transmission capability indicating a remaining bandwidth on a link (a, b) between the access control equipment (10) and each of at least one user-side equipment (20, 21) respectively, said first relating information for transmission capability being indicating the transmission capability between the access control equipment (10) and the corresponding user-side equipment (20, 21), wherein said corresponding user-side equipments (20, 21) are associated with the user terminals (30, 31, 32, 33);
a first providing means (1001), for informing corresponding user-side equipments (20, 21) of the obtained first relating information for transmission capability, said first relating information for transmission capability being to be provided by said user-side equipment (20, 21) for the user terminals (30, 31, 32, 33) dominated by the user-side equipment (20, 21).

## Patentansprüche

1. Verfahren in einer Zugangskontrolleinrichtung (10) bei Festnetzzugängen zum Verarbeiten des Zugangs von Benutzerendgeräten (30, 31, 32, 33), umfassend folgende Schritte:
a. Erhalten von ersten betreffenden Informationen zur Übertragungsfähigkeit, die eine verbleibende Bandbreite auf einer Verbindung (a, b) zwischen jeweils der Zugangskontrolleinrichtung (10) und jeder von einer oder mehreren benutzerseitigen Einrichtungen (20, 21) angeben;
b. Informieren der entsprechenden benutzerseitigen Einrichtungen (20, 21) über die erhaltenen ersten betreffenden Informationen zur Übertragungsfähigkeit, wobei die besagten entsprechenden benutzerseitigen Einrichtungen (20, 21) mit den Benutzerendgeräten (30, 31, 32, 33) verbunden sind, die besagten ersten betreffenden Informationen zur Übertragungsfähigkeit von der besagten benutzerseitigen Einrichtung (20, 21) für die Benutzerendgeräte (30, 31, 32, 33), die von der benutzerseitigen Einrichtung dominiert werden, bereitgestellt werden müssen.

2. Verfahren nach Anspruch 1,
**dadurch gekennzeichnet, dass**
besagte mindestens eine benutzerseitige Einrichtung (20, 21) mindestens eine benutzerseitige Einrichtung mit benutzerseitigen Ports eines ersten Typs (20, 21) umfasst, wobei besagter Schritt a Folgendes umfasst:
a1. für jede der benutzerseitigen Einrichtungen mit benutzerseitigen Ports des ersten Typs (20, 21), das Bestimmen der Übertragungsressource, zwischen der Zugangskontrolleinrichtung (10) und der benutzerseitigen Einrichtung (20, 21), die für die Verkehrsübertragung von Endgeräten ersten Typs verfügbar ist, um ein bestimmendes Ergebnis einer verfügbaren Ressource zu erhalten;
a2. Heranziehen des bestimmenden Ergebnisses als besagte erhaltene erste betreffende Informationen zur Übertragungsfähigkeit.

3. Verfahren nach Anspruch 2,
**dadurch gekennzeichnet, dass**
besagter Schritt a1 Folgendes umfasst:
a11. Erfassen der Übertragungsressource, zwischen der Zugangskontrolleinrichtung (10) und der benutzerseitigen Einrichtung (20, 21), die zur Verkehrsübertragung von bereits zugegriffenen Benutzerendgeräten (30, 31, 32, 33), die von der benutzerseitigen Einrichtung (20, 21) dominiert werden, verwendet wurde, um ein Erfassungsergebnis einer Ressourcenbelegung zu erhalten;
wobei besagte zugegriffene Benutzerendgeräte (30, 31, 32, 33) zugegriffene Benutzerendgeräte des ersten Typs (30, 31) und/oder zugegriffene Benutzerendgeräte eines zweiten Typs (32, 33) umfassen;
a12. Bestimmen der Übertragungsressource, zwischen der Zugangskontrolleinrichtung (10) und der benutzerseitigen Einrichtung (20, 21), die zur Verkehrsübertragung von bereits zugegriffenen Benutzerendgeräten (30, 31, 32, 33) nicht verwendet wurde, gemäß dem Erfassungsergebnis der Ressourcenbelegung und der Gesamtübertragungsressource zwischen der Zugangskontrolleinrichtung (10) und der benutzerseitigen Einrichtung (20, 21), und Heranziehen der bestimmten Übertragungsressource als besagtes bestimmendes Ergebnis einer verfügbaren Ressource.

4. Verfahren nach Anspruch 3,
**dadurch gekennzeichnet, dass**
das Verfahren weiterhin folgenden Schritt umfasst:
i. Bestimmen eines ersten Übertragungsressourcenteils und eines zweiten Übertragungsressourcenteils von der Gesamtübertragungsressource zwischen der Zugangskontrolleinrichtung (10) und der benutzerseitigen Einrichtung (20, 21), gemäß einer vorausdefinierten Regel, um Angabeinformationen zu generieren, zum Angeben des ersten Übertragungsressourcenteils und des zweiten Übertragungsressourcenteils;
wobei besagter erster Übertragungsressourcenteil für die Verkehrsübertragung von mindestens einem Benutzerendgerät des ersten Typs (30, 31) zu verwenden ist, das von der benutzerseitigen Einrichtung (20, 21) dominiert wird, und besagter zweiter Übertragungsressourcenteil für die Verkehrsübertragung von mindestens einem Benutzerendgerät des zweiten Typs (32, 33) zu verwenden ist, das von der benutzerseitigen Einrichtung (20, 21) dominiert wird;
ii. Bereitstellen der besagten generierten Angabeinformationen für besagte benutzerseitige Einrichtung (20, 21).

5. Verfahren nach Anspruch 4,
**dadurch gekennzeichnet, dass**
besagter Schritt i Folgendes umfasst:
i1. Bestimmen, ob die benutzerseitige Einrichtung (20, 21) mindestens ein bereits zugegriffenes Benutzerendgerät des zweiten Typs (32, 33) dominiert oder nicht;
i2. Erfassen der Summe anfordernder Ressourcen des besagten mindestens einen bereits zugegriffenen Benutzerendgeräts des zweiten Typs (32, 33), falls die benutzerseitige Einrichtung (20, 21) mindestens ein bereits zugegriffenes Benutzerendgerät des zweiten Typs (32, 33) dominiert;
i3. Heranziehen der erfassten Summe anfordernder Ressourcen des besagten mindestens einen bereits zugegriffenen Benutzerendgeräts des zweiten Typs (32, 33) als besagten bestimmten zweiten Übertragungsressourcenteil;
i4. Heranziehen eines Teils oder der gesamten Übertragungsressource, in der Gesamtübertragungsressource zwischen der Zugangskontrolleinrichtung (10) und der benutzerseitigen Einrichtung (20, 21), mit Ausnahme des zweiten Übertragungsressourcenteils, als besagten bestimmten ersten Übertragungsressourcenteil.

6. Verfahren nach Anspruch 5,
**dadurch gekennzeichnet, dass**
besagter Schritt i weiterhin Folgendes umfasst:
i2'. Heranziehen eines Teils oder der gesamten Gesamtübertragungsressource zwischen der Zugangskontrolleinrichtung (10) und der benutzerseitigen Einrichtung (20, 21) als besagten bestimmten ersten Übertragungsressourcenteil, falls die benutzerseitige Einrichtung (20, 21) kein bereits zugegriffenes Benutzerendgerät des zweiten Typs (32, 33) dominiert.

7. Verfahren nach einem beliebigen der Ansprüche 2 bis 6,
**dadurch gekennzeichnet, dass**
besagte benutzerseitige Ports des ersten Typs einen benutzerseitigen Wi-Fi-Port und/oder Bluetooth-Port umfassen;
wobei besagte Benutzerendgeräte des ersten Typs (30, 31) Benutzerendgeräte (30, 31) umfassen, die mit besagter benutzerseitiger Einrichtung (20, 21) unter Verwendung von Wi-Fi und/oder Bluetooth kommunizieren;
wobei besagte Benutzerendgeräte des zweiten Typs (32, 33) Benutzerendgeräte (32, 33) umfassen, die mit besagter benutzerseitiger Einrichtung (21) mittels Festnetzleitungen kommunizieren.

8. Erste Verarbeitungsvorrichtung (100) in einer Zugangskontrolleinrichtung (10) bei Festnetzzugängen zum Verarbeiten des Zugangs von Benutzerendgeräten (30, 31, 32, 33), umfassend:
ein erstes Erhaltungsmittel (1000) zum Erhalten von ersten betreffenden Informationen zur Übertragungsfähigkeit, die eine verbleibende Bandbreite auf einer Verbindung (a, b) zwischen jeweils der Zugangskontrolleinrichtung (10) und jeder von mindestens einer benutzerseitigen Einrichtung (20, 21) angeben, wobei die besagten ersten betreffenden Informationen zur Übertragungsfähigkeit die Übertragungsfähigkeit zwischen der Zugangskontrolleinrichtung (10) und der entsprechenden benutzerseitigen Einrichtung (20, 21) angeben, wobei besagte entsprechende benutzerseitige Einrichtungen (20, 21) mit den Benutzerendgeräten (30, 31, 32, 33) verbunden sind;
ein erstes Bereitstellungsmittel (1001) zum Informieren der entsprechenden benutzerseitigen Einrichtungen (20, 21) über die erhaltenen ersten betreffenden Informationen zur Übertragungsfähigkeit, wobei die besagten ersten betreffenden Informationen zur Übertragungsfähigkeit von der besagten benutzerseitigen Einrichtung (20, 21) für die Benutzerendgeräte (30, 31, 32, 33), die von der benutzerseitigen Einrichtung (20, 21) dominiert werden, bereitgestellt werden müssen.

## Revendications

1. Procédé, dans un équipement de contrôle d'accès (10) dans des réseaux d'accès fixes, de traitement de l'accès de terminaux d'utilisateur (30, 31, 32, 33), comprenant les étapes suivantes :
a. obtenir des premières informations afférentes à la capacité de transmission indiquant une largeur de bande restante sur une liaison (a, b) respectivement entre l'équipement de contrôle d'accès (10) et chacun d'un ou de plusieurs équipements côté utilisateur (20, 21) ;
b. informer les équipements côté utilisateur (20, 21) correspondants des premières informations afférentes à la capacité de transmission obtenues, lesdits équipements côté utilisateur (20, 21) étant associés aux terminaux d'utilisateur (30, 31, 32, 33), lesdites premières informations afférentes à la capacité de transmission devant être fournies par ledit équipement côté utilisateur (20, 21) pour les terminaux d'utilisateur (30, 31, 32, 33) dominés par l'équipement côté utilisateur.

2. Procédé selon la revendication 1,
**caractérisé en ce que**
ledit au moins un équipement côté utilisateur (20, 21) comprend au moins un équipement côté utilisateur muni de ports côté utilisateur d'un premier type (20, 21), ladite étape a comprenant :
a1. pour chacun des équipements côté utilisateur qui est muni de ports côté utilisateur d'un premier type (20, 21), déterminer la ressource de transmission, entre l'équipement de contrôle d'accès (10) et l'équipement côté utilisateur (20, 21), disponible pour la transmission du trafic des terminaux du premier type, de manière à obtenir un résultat de détermination de la ressource disponible ;
a2. considérer le résultat de détermination comme lesdites premières informations afférentes à la capacité de transmission obtenues.

3. Procédé selon la revendication 2,
**caractérisé en ce que**
**ladite étape a1 comprend:**
a11. détecter la ressource de transmission entre l'équipement de contrôle d'accès (10) et l'équipement côté utilisateur (20, 21) qui a été utilisée pour la transmission du trafic des terminaux d'utilisateur (30, 31, 32, 33) auxquels un accès a déjà eu lieu dominés par l'équipement côté utilisateur (20, 21), de manière à obtenir le résultat de détection de l'occupation de la ressource ;
lesdits terminaux d'utilisateur (30, 31, 32, 33) auxquels un accès a eu lieu comprenant des terminaux d'utilisateur auxquels un accès a eu lieu du premier type (30, 31) et/ou des terminaux d'utilisateur auxquels un accès a eu lieu d'un deuxième type (32, 33) ;
a12. déterminer la ressource de transmission entre l'équipement de contrôle d'accès (10) et l'équipement côté utilisateur (20, 21) qui n'a pas été utilisée pour la transmission du trafic des terminaux d'utilisateur (30, 31, 32, 33) auxquels un accès a déjà eu lieu, conformément au résultat de la détection de l'occupation de la ressource et la ressource de transmission totale entre l'équipement de contrôle d'accès (10) et l'équipement côté utilisateur (20, 21) et en considérant la ressource de transmission déterminée comme ledit résultat de la détermination de la ressource disponible.

4. Procédé selon la revendication 3,
**caractérisé en ce que**
le procédé comprend en outre l'étape de :
i. déterminer une première partie d'une ressource de transmission et une deuxième partie d'une ressource de transmission de la ressource de transmission totale entre l'équipement de contrôle d'accès (10) et l'équipement côté utilisateur (20, 21), conformément à une règle prédéfinie, de manière à générer des informations d'indication destinées à indiquer la première partie de la ressource de transmission et la deuxième partie de la ressource de transmission ;
ladite première partie de la ressource de transmission étant utilisée pour la transmission du trafic d'au moins un terminal d'utilisateur du premier type (30, 31) dominé par l'équipement côté utilisateur (20, 21) et
ladite deuxième partie de la ressource de transmission étant utilisée pour la transmission du trafic d'au moins un terminal d'utilisateur du deuxième type (32, 33) dominé par l'équipement côté utilisateur (20, 21) ;
ii. fournir lesdites informations d'indication générées pour ledit équipement côté utilisateur (20, 21).

5. Procédé selon la revendication 4,
**caractérisé en ce que**
ladite étape i. comprend :
i1. déterminer si l'équipement côté utilisateur (20, 21) domine ou non au moins un terminal d'utilisateur du deuxième type (32, 33) auquel un accès a déjà eu lieu ;
i2. détecter la somme des ressources exigées desdits terminaux d'utilisateur du deuxième type (32, 33) auxquels un accès a déjà eu lieu dans le cas où l'équipement côté utilisateur (20, 21) domine au moins un terminal d'utilisateur du deuxième type (32, 33) auquel un accès a déjà eu lieu ;
i3. considérer la somme détectée des ressources exigées desdits terminaux d'utilisateur du deuxième type (32, 33) auxquels un accès a déjà eu lieu comme ladite deuxième partie déterminée de la ressource de transmission ;
i4. considérer une partie ou la totalité de la ressource de transmission, dans la ressource de transmission totale entre l'équipement de contrôle d'accès (10) et l'équipement côté utilisateur (20, 21), à l'exception de la deuxième partie de la ressource de transmission, comme ladite première partie déterminée de la ressource de transmission.

6. Procédé selon la revendication 5,
**caractérisé en ce que**
ladite étape i. comprend en outre :
i2'. considérer une partie ou la totalité de la ressource de transmission totale entre l'équipement de contrôle d'accès (10) et l'équipement côté utilisateur (20, 21) comme ladite première partie déterminée de la ressource de transmission dans le cas où ledit équipement côté utilisateur (20, 21) ne domine pas un terminal d'utilisateur du deuxième type (32, 33) auquel un accès a déjà eu lieu.

7. Procédé selon l'une quelconque des revendications 2 à 6,
**caractérisé en ce que**
lesdits ports côté utilisateur du premier type comprennent un port côté utilisateur de type WiFi et/ou Bluetooth ;
lesdits terminaux d'utilisateur du premier type (30, 31) comprennent des terminaux d'utilisateur (30, 31) qui communiquent avec ledit équipement côté utilisateur (20, 21) en utilisant le WiFi et/ou le Bluetooth ;
lesdits terminaux d'utilisateur du deuxième type (32, 33) comprennent des terminaux d'utilisateur (32, 33) qui communiquent avec ledit équipement côté utilisateur (21) au moyen de lignes fixes.

8. Premier dispositif de traitement (100), dans un équipement de contrôle d'accès (10) dans des réseaux d'accès fixes, destiné au traitement de l'accès de terminaux d'utilisateur (30, 31, 32, 33), comprenant :
des premiers moyens d'obtention (1000) destinés à obtenir des premières informations afférentes à la capacité de transmission indiquant une largeur de bande restante sur une liaison (a, b) respectivement entre l'équipement de contrôle d'accès (10) et au moins un équipement côté utilisateur (20, 21), lesdites premières informations afférentes à la capacité de transmission indiquant la capacité de transmission entre l'équipement de contrôle d'accès (10) et l'équipement côté utilisateur (20, 21) correspondant, lesdits équipements côté utilisateur (20, 21) correspondants étant associés aux terminaux d'utilisateur (30, 31, 32, 33) ;
des premiers moyens de fourniture (1001) destinés à informer les équipements côté utilisateur (20, 21) correspondants des premières informations afférentes à la capacité de transmission obtenues, lesdites premières informations afférentes à la capacité de transmission devant être fournies par ledit équipement côté utilisateur (20, 21) pour les terminaux d'utilisateur (30, 31, 32, 33) dominés par l'équipement côté utilisateur (20, 21).
